Europäisches Patentamt

European Patent Office

Office européen des brevets

(19)

(11) Publication number: **0 117 952**
**B1**

(12) **EUROPEAN PATENT SPECIFICATION**

(45) Date of publication of patent specification: **21.09.88**

(51) Int. Cl.⁴: **B 65 D 30/00**

(21) Application number: **83307782.9**

(22) Date of filing: **20.12.83**

(54) **Containers having heat-sealed juncture regions.**

(30) Priority: **27.12.82 US 453243**

(43) Date of publication of application:
**12.09.84 Bulletin 84/37**

(45) Publication of the grant of the patent:
**21.09.88 Bulletin 88/38**

(84) Designated Contracting States:
**BE DE FR GB IT NL**

(56) References cited:
**FR-A-2 137 532**
**FR-A-2 217 954**
**FR-A-2 322 738**
**GB-A-2 020 605**
**US-A-2 878 153**

(73) Proprietor: **MOBIL OIL CORPORATION**
**150 East 42nd Street**
**New York New York 10017 (US)**

(72) Inventor: **Mier, Marjory Anne**
**18-F Ari Drive**
**Somerset New Jersey 08873 (US)**

(74) Representative: **Cooper, John Anthony et al**
**Mobil Court 3 Clements Inn**
**London WC2A 2EB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention is related to containers of the type having at least one heat-sealed juncture region, and more particularly, to such containers formed from foam polymer sheet materials.

Foamed polystyrene is used for products such as egg cartons, food containers and meat trays, since this material is readily thermoformable. However, many container structures are not suitable for thermal formation. Such structures include envelopes, multi-sided cartons, pouches for items such as french fries and others. These structures require a material which can be folded without cracking or breaking at the fold point, thereby excluding conventional foam polystyrene and poly(p-methylstyrene). Also, these structures require that juncture points of the panels be fastened together by heat sealing. However, foamed polystyrene generally has not been satisfactory for heat sealing, perhaps because of the thickness differential between the actual sealed portion and the remaining foamed structure.

US—A—4,201,818 describes a flexible plastic foam formed by partially crushing a foam sheet between textured rollers. The treatment is said to provide a product suitable as a replacement for paper. GB—A—2096616 includes a similar disclosure.

US—A—3,256,527 describes a process for forming envelopes by heat sealing. Two layers of foam are heat-sealed through the application of heat and pressure. Heat is also applied for a short distance beyond the area in which pressure is applied.

According to the invention container comprises a first layer of a foam polymer sheet material and a second layer of a polymer sheet material heat-sealed to the first layer over a part of the surface of each sheet (as known from US—A—3256527), characterised in that the first layer has an area of crushed and compressed cellular structure interposed between at least one of the two major surfaces of the layer and the heat-sealed portion, the area of crushed and compressed cellular structure being made by compressing the first layer to about 60—70% of the original thickness thereof and having a width which is at least as great as the thickness of uncompressed foam in the first layer.

To produce such a first layer, there is employed a polymer foam which has been treated in such a way as to crush and compress the cell structure of the foam, thus partially destroying the resilient and surface face character of the foam and removing at least some compressed gaseous material trapped within the foamed structure. This also reduces the gauge of the foam and causes some of the previously gas-filled cells to become crushed and compressed.

This treatment is accomplishsd by sandwiching the foamed plastic sheet between surfaces, at least one of which is textured, for instance screen-like, placed in a press or other suitable compressing means and compressed to reduce the thickness of the sheet while simultaneously crushing a substantial portion of the cells of the foamed sheet at one or both surfaces of the sheet. Although the cells of the foam become crushed they remain unruptured. Some ruptured cells can be found at the surface, but no more than can be found with uncrushed foam. The foam is crushed to be about 60—70% of its original thickness. Preheating the foam has been found to have little effect. The foam cells tend to be flattened in the direction of applied pressure and buckle in an "S" curve. The foamed sheet can be subjected to a second compression between smooth surfaces if a sheet with a smoother surface is desired. This will further densify or further reduce the thickness of the foamed sheet and also restore some of the smooth character to the surface of the sheet. This process is described in the aforementioned US—A—4,201,818.

Foamed sheet processed in the manner described above possesses improved folding characteristics. The terms "folding" or "foldable" are used in the same sense that cellulosic paper is foldable. Just as paper can be folded upon itself and creased at the fold line, the crushed and compressed foamed polymer has at least similar characteristics.

The product formed as a result of this process possesses excellent paper-like surface characteristics. Generally, a paperboard will be stiffer and show greater tensile strength than the crushed foam. The foam can be used in a laminate with cloth and/or another polymer such as high impact polystyrene to provide improved mechanical properties. Compression of the foam does not decrease thermal insulation properties, and the compressed foam is about twice as effective as an insulator than paperboard. The compressed foam also has improved oxygen, moisture and grease resistance as compared to paperboard. It also has been determined that as a result of processing the sheet in this manner, the resulting polymer can be bonded to itself or to another material with a bonding strength which is considerably stronger than foamed polymer not possessing the crushed and compressed cells obtained as a result of the compression treatment. Examples of useful products include envelopes, place mats, cups, ice cream cartons, pie or sandwich boxes, french fry pouches and serving trays.

Fig. 1 shows a sectional side view of a heat-sealed envelope prepared from a sheet of foam polymeric material according to the present invention; and

Fig. 2 shows a sectional side view similar to that of Fig. 1, except using one layer of unfoamed polymeric material.

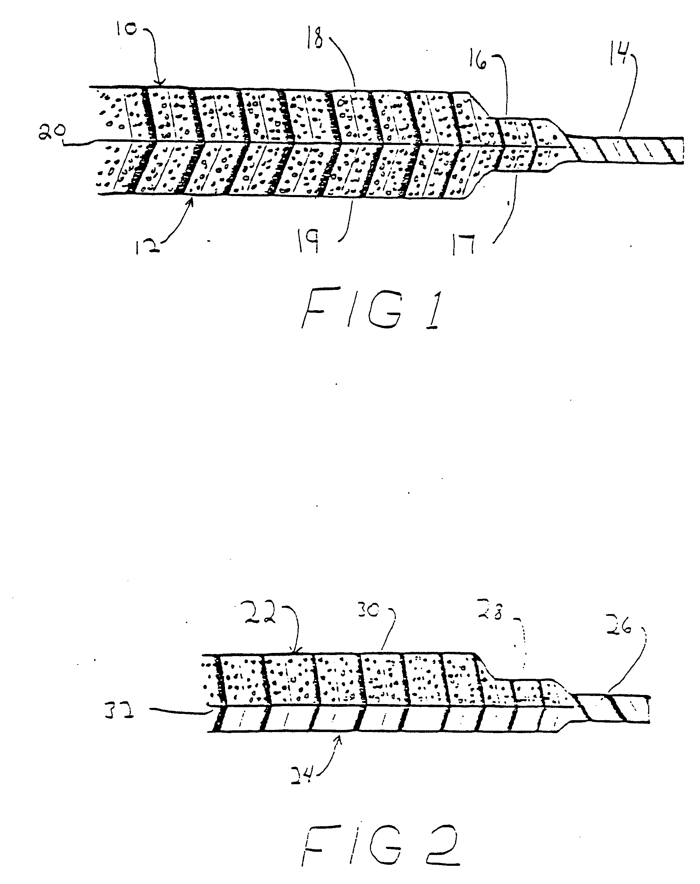

Referring to Fig. 1, an envelope can be prepared which has two layers 10 and 12 of foamed polymeric sheet material. These layers can be produced by using two separate sheets of material, or by folding a single sheet of material upon itself. The two layers are joined at the heat-sealed region 14.

2

Directly adjacent to the heat-sealed portion of the envelope is an area of crushed and compressed cellular structure 16 or 17. Crushed areas 16 and 17 have been formed through compression of one major surface of layers 10 and 12, respectfully. However, it would be equally effective to crush both major surfaces of each layer prior to heat sealing. The compressed and crushed cellular structure of the areas 16 or 17 is adjacent to at least one of the two major layer surfaces. That is, the compressed and crushed cellular structure may be near the top and/or bottom of each respective layer 10 and 12. It also is desirable to have the crushed cellular structure in the area of any folding.

Crushed areas 16 and 17 each have a width which is at least as great as the thickness of uncrushed portion 18 and 19 of the sheet material. The thickness of the uncrushed portion of the foam layer is meant to refer to the thickness in the vicinity of the crushed and compressed area. Variations in the thickness of the layer 18 or 19 at points removed from the crushed areas 16 and 17 have no bearing upon the performance of the present invention. Also, it should be noted that the width of the crushed areas 16 and 17 can be independent of each other. For example, if layer 10 was thinner than layer 12, its crushed area 16 could be narrower than area 17. Also, it is not essential that the portions 18 and 19 be present at all. That is, both layers 10 and 12 may be composed of completely crushed and compressed foam polymer sheet material. Line 20 is provided in Fig. 1 to show the boundary between the layers 10 and 12. The layers 10 and 12 are not physically joined along line 20 but rather merely abut each other and are easily parted to provide the opening within the envelope.

Fig. 2 shows a second embodiment of the present invention which includes layers 22 and 24, which are heat-sealed together at 26. Layer 22 is of a foamed material while layer 24 is of an unfoamed polymer. The choice of unfoamed polymer will depend upon the desired use of the product, but may include unfoamed polyethylene or unfoamed polystyrene. Like layers 10 and 12 of Fig. 1, layer 22 is provided with crushed and compressed area 28. As with the previous embodiment, crushed area 28 has a width which is equal to the thickness of the uncompressed portion 30 of layer 22. As mentioned previously, it is not essential that layer 22 be provided with an uncrushed portion 30. Layer 22 may be formed from a sheet which is completely crushed.

As mentioned in relation to crushed areas 16 and 17, area 28 has been formed through compression at one major surface of layer 22. However, it would be equally effective if layer 22 was crushed at both major surfaces prior to heat sealing.

The present invention contemplates employing any foamed thermoplastic polymer, the cells of which can be crushed and compressed so that its gauge can be reduced. Preferred are polystyrene and poly(p-methylstyrene) foam. In accordance with US—A—4,201,818, a polystyrene foamed sheet of weight/area ratio 0.016 $g/cm^2$ (10 g/100 in.$^2$) was pressed between window screens of mesh size 20 at a pressure of about 4619.kPa (670 psi) for about ten minutes. The sheet prior to pressing had an average thickness of about 2.54 mm (100 mils). Following compression the sheet had an average thickness of about 0.89 mm (35 mils). Strips of the so pressed and so fractured foam were heat-sealed on a Vertrod (Trade Mark) Thermal Impulse Heat Sealer. The seals produced were significantly stronger than seals formed in strips of unpressed foam. Strips made of the precursor, unpressed foam which were heat-sealed, broke apart quite easily. The weakness is believed to be due to the thickness differential between the interfacial sealed region and the gross thickness of the uncrushed cellular foam structure. This gross cellular thickness is considerably reduced by the process of US—A—4,201,818 and the result is that a crushed and compressed cell structure of this type provides an excellent heat-sealed region.

In accordance with the present invention three types of containers were made having the comparatively strong heat seal junctures described herein. One is a mailing envelope preapred by folding a length of crushed and compressed polystyrene sheet upon itself so as to leave a closure flap extending beyond the folded over portion. The sides were heat-sealed and the extension cut to a triangular shape for sealing or fastening by any means, including heat-sealing. Another was a tetrahedron carton with heat-sealed junctures made from the same polystyrene stock. The third was a pouch, such as could be used as a container for french fried potatoes. This was formed by a sheet folded back upon itself and side heat-sealed. In all cases the heat-seals were firm and of greater strength than would be the case if non-crused and non-compressed foam were employed.

**Claims**

1. A container comprising a first layer (10) of a foam polymer sheet material (18) and a second layer (12) of a polymer sheet material heat-sealed to the first layer over a part of the surface of each sheet, characterised in that the first layer has an area of crushed and compressed cellular structure (16) interposed between at least one of the two major surfaces of the layer and the heat-sealed portion (14), the area of crushed and compressed cellular structure being made by compressing the first layer to about 60—70% of the original thickness thereof and having a width which is at least as great as the thickness of uncompressed foam in the first layer.

2. The container of claim 1, wherein the second layer (12) comprises a foam polymer sheet material (19) having an area of crushed and compressed cellular structure (17) interposed between at least one of the two major surfaces of the layer and the heat-sealed portion, the area of crushed and compressed cellular structure being made by compressing the second layer to about 60—70% of the original thickness thereof and having a width which is at least as great as the thickness of uncompressed foam in the second layer.

3. The container as in claim 1, wherein the second layer comprises an unfoamed polymer sheet material.

4. The container of any preceding claim, wherein the crushed. and compressed cellular structure is interposed between both of the two major surfaces of the first layer.

5. The container of claim 1, 2 or 4, wherein the crushed and compressed cellular structure is interposed between both the two major surfaces of both of the first and second layers.

6. The container of any preceding claim, wherein the first and second layers comprise polystyrene or poly(p-methylstyrene).

## Patentansprüche

1. Behälter mit einer ersten Schicht (10) einer geschäumten Polymerfolie (18) und einer zweiten Schicht (12) einer Polymerfolie, welche mit der ersten Schicht über einen Teil der Oberfläche einer jeden Folie heißgesiegelt ist, dadurch gekennzeichnet, daß die erste Schicht einen Bereich aus einer zusammengedrückten und verdichteten Zellstruktur (16) aufweist, die zwischen mindestens einer der zwei Hauptoberflächen der Schicht und dem heißgesiegelten Abschnitt (14) liegt, wobei der Bereich der zusammengedrückten und verdichteten Zellstruktur durch Verdichten der ersten Schicht auf etwa 60—70% ihrer Ausgangsdicke hergestellt wird, und dieser Bereich eine Breite aufweist, die mindestens so groß ist wie die Dicke des nicht verdichteten Schaumes in der ersten Schicht.

2. Behälter nach Anspruch 1, worin die zweite Schicht (12) eine geschäumte Polymerfolie (19) aufweist, die einen Bereich aus einer zusammengedrückten und verdichteten Zellstruktur (17) aufweist, die zwischen mindestens einer der zwei Hauptoberflächen der Schicht und dem heißgesiegelten Abschnitt liegt, wobei der Bereich der zusammengedrückten und verdichteten Zellstruktur durch Verdichten der zweiten Schicht auf etwa 60—70% ihrer Ausgangsdicke hergestellt wird, und dieser Bereich eine Breite aufweist, die mindestens so groß ist wie die Dicke des nicht verdichteten Schaumes in der zweiten Schicht.

3. Behälter nach Anspruch 1, worin die zweite Schicht eine ungeschäumte Polymerfolie aufweist.

4. Behälter nach einem der vorstehenden Ansprüche, worin die zusammengedrückte und verdichtete Zellstruktur zwischen den zwei Hauptoberflächen der ersten Schicht liegt.

5. Behälter nach Anspruch 1, 2 oder 4, worin die zusammengedrückte und verdichtete Zellstruktur zwischen den zwei Hauptoberflächen sowohl der ersten als auch der zweiten Schicht liegt.

6. Behälter nach einem der vorstehenden Ansprüche, worin die erste und die zweite Schicht Polystyrol oder Poly(p-methylstyrol) enthalten.

## Revendications

1. Récipient comprenant une première couche (10) d'une matière en feuille en mousse de polymère (18) et d'une deuxième couche (12) d'une matière en feuille polymère soudée à chaud à la première couche, sur une partie de la surface de chaque feuille, caractérisé en ce que la première couche possède une zone de structure alvéolaire écrasée et comprimée (16) interposée entre au moins une des deux grandes faces de la couche et la portion soudée à chaud (14), la zone de structure alvéolaire écrasée et comprimée étant formée en comprimant la première couche à environ 60—70% de l'épaisseur d'origine et cette zone possédant une largeur qui est au moins aussi grande que l'épaisseur de la mousse non comprimée de la première couche.

2. Récipient selon la revendication 1, dans lequel la deuxième couche (12) comprend une matière en feuille en mousse de polymère (19) qui présente une zone de structure alvéolaire écrasée et comprimée (17) interposée entre au moins une des grandes faces de la couche et la portion soudée à chaud, la zone de structure alvéolaire écrasée et comprimée étant formée en comprimant la deuxième couche à environ 60—70% de son épaisseur d'origine et ayant une largeur qui est au moins aussi grande que l'épaisseur de la mousse non comprimée de la deuxième couche.

3. Récipient selon la revendication 1, dans lequel la deuxième couche comprend une matière en feuille polymère non transformée en mousse.

4. Récipient selon une quelconque des revendications précédentes, dans lequel la structure alvéolaire écrasée et comprimée est interposée entre les deux grandes faces de la première couche.

5. Récipient selon une des revendications 1, 2 et 4, dans lequel la structure alvéolaire écrasée et comprimée est interposée entre les deux grandes faces de la première et de la deuxième couches.

6. Récipient dans lequel la première et la deuxième couches comprennent du polystyrène ou du poly(p-méthyl-styrène).

FIG 1

FIG 2

1